Europäisches Patentamt

European Patent Office

Office européen des brevets

(19)

(11)    **EP 0 756 517 B1**

(12)                    **FASCICULE DE BREVET EUROPEEN**

(45) Date de publication et mention
de la délivrance du brevet:
**01.08.2001  Bulletin 2001/31**

(51) Int Cl.[7]: **B01J 19/00**, B01J 3/00,
B65D 90/32

(21) Numéro de dépôt: 96903078.2

(22) Date de dépôt: **09.02.1996**

(86) Numéro de dépôt international:
**PCT/FR96/00216**

(87) Numéro de publication internationale:
**WO 96/25227 (22.08.1996 Gazette 1996/38)**

(54) **DISPOSITIF DE SECURITE D'UN APPAREIL SOUS PRESSION DE GAZ OU DE VAPEUR**

SICHERHEITSEINRICHTUNG FÜR EINE VORRICHTUNG UNTER GAS- ODER DAMPFDRUCK

SAFETY DEVICE FOR A GAS OR STEAM PRESSURE VESSEL

(84) Etats contractants désignés:
**AT BE CH DE DK ES FR GB GR IE IT LI LU MC NL
PT SE**

(30) Priorité:  **17.02.1995  FR 9501878**

(43) Date de publication de la demande:
**05.02.1997  Bulletin 1997/06**

(73) Titulaire: **Industrie Chimique Mulhouse Dornach
68200 Mulhouse (FR)**

(72) Inventeur: **BAJOLET, Daniel
F-68200 Mulhouse (FR)**

(74) Mandataire: **Moncheny, Michel et al
c/o Cabinet Lavoix
2 Place d'Estienne d'Orves
75441 Paris Cedex 09 (FR)**

(56) Documents cités:
**DD-A- 254 885          DE-A- 4 018 232
DE-C- 149 086          GB-A- 2 246 576**

• **DATABASE WPI Section Ch, Week 7509 Derwent
Publications Ltd., London, GB; Class J09, AN
75-15543W XP002003159 & SU,A,423 995
(S.M.BEIZEROV ET AL.) , 16 Septembre 1974**
• **CHEMICAL ENGINEERING PROGRESS, vol. 81,
no. 8, Août 1985, NEW YORK US, pages 57-62,
XP002003158 M.A.GROLMES ET AL.:
"Large-Scale Experiments of Emergency Relief
Systems"**

EP 0 756 517 B1

**Description**

La présente invention est relative à un dispositif de sécurité d'un appareil sous pression de gaz ou de vapeur comme par exemple un réacteur comprenant au moins une soupape aval reliée à l'appareil sous pression par une tubulure portant un disque d'éclatement qui sépare cette tubulure en un tronçon amont et un tronçon aval.

La réglementation en vigueur exige que les appareils sous pression de gaz ou de vapeur soient protégés par une ou des soupapes de sécurité. Lorsque ces soupapes risquent d'être encrassées par des produits issus de l'exploitation normale de ces appareils, il est courant de placer en amont de ces soupapes, un disque d'éclatement prévu pour s'ouvrir avant que la pression de début d'ouverture des soupapes soit atteinte.

Cependant, l'exploitation industrielle de ces dispositifs à soupape de sécurité conduit parfois à l'ouverture intempestive d'une soupape, ce qui a pour inconvénient d'entraîner une pollution accidentelle de l'environnement du site. Cette ouverture est d'autant plus ennuyeuse qu'elle est consécutive à la rupture accidentelle du disque d'éclatement, alors même que la pression dans l'appareil sous pression est très inférieure à la pression de début d'ouverture de la ou des soupapes. Par exemple, il a déjà été constaté qu'un disque d'éclatement taré à 48 bars rompant accidentellement sous une pression de 41 bars, provoque l'ouverture d'une soupape de sécurité tarée à 50 bars.

L'invention a pour but de proposer un dispositif de sécurité qui permet d'empêcher une ouverture intempestive d'une soupape de sécurité lors de la rupture accidentelle d'un disque d'éclatement alors que la pression dans un appareil d'utilisation sous pression protégé par la soupape est nettement inférieure à la pression de début d'ouverture de cette soupape.

A cet effet, l'invention a pour objet un dispositif de sécurité d'un appareil sous pression de gaz ou de vapeur comprenant au moins une soupape aval reliée à l'appareil sous pression par une tubulure portant un disque d'éclatement qui sépare cette tubulure en un tronçon amont et un tronçon aval, caractérisé en ce que le tronçon aval comporte des moyens de protection adaptés pour minimiser la pression maximale d'une onde de choc créée par la rupture du disque d'éclatement et frappant le clapet de ladite au moins une soupape.

Le dispositif de sécurité d'un appareil sous pression suivant l'invention peut comporter une ou plusieurs des caractéristiques suivantes :

- les moyens de protection sont formés par un gaz de faible masse molaire et possédant des rapports $\gamma$ des capacités calorifiques à pression et volume constants élevés contenu dans le tronçon aval B ;
- les moyens de protection sont formés par une enceinte contenant un gaz et placée sur le tronçon B, et de forme adaptée pour réduire l'onde de choc formée d'une onde de choc incidente et d'une onde de choc réfléchie et agissant sur le clapet de ladite au moins une soupape ;
- les moyens de protection sont formés par un gaz de faible masse molaire et possédant des rapports $\gamma$ des capacités calorifiques à pression et à volume constants élevés contenu dans une enceinte disposée sur le tronçon aval B ;
- le gaz est formé par l'un des deux gaz parmi l'hydrogène et l'hélium ;
- pour un dispositif à plusieurs soupapes, chaque soupape est indépendamment reliée à l'enceinte;
- le clapet d'au moins une soupape est relié à au moins une crépine faisant saillie à l'intérieur de l'enceinte ; et
- l'enceinte est reliée à des moyens de maintien de ladite enceinte en légère surpression de gaz.

Un exemple de l'état de la technique ainsi qu'un exemple de réalisation du dispositif suivant l'invention vont maintenant être décrits en regard des dessins annexés, sur lesquels :

- la figure 1 est un schéma d'un dispositif suivant l'art antérieur ;
- la figure 2 est un graphique des caractéristiques d'une onde de choc créée par la rupture d'un disque d'éclatement du dispositif de la figure 1 ;
- la figure 3 est un schéma d'un dispositif de sécurité suivant l'invention ;
- la figure 4 est un graphique donnant les caractéristiques d'une onde de choc générée par la rupture du disque d'éclatement du dispositif de la figure 3, et
- la figure 5 est un schéma d'un autre mode de réalisation de l'invention.

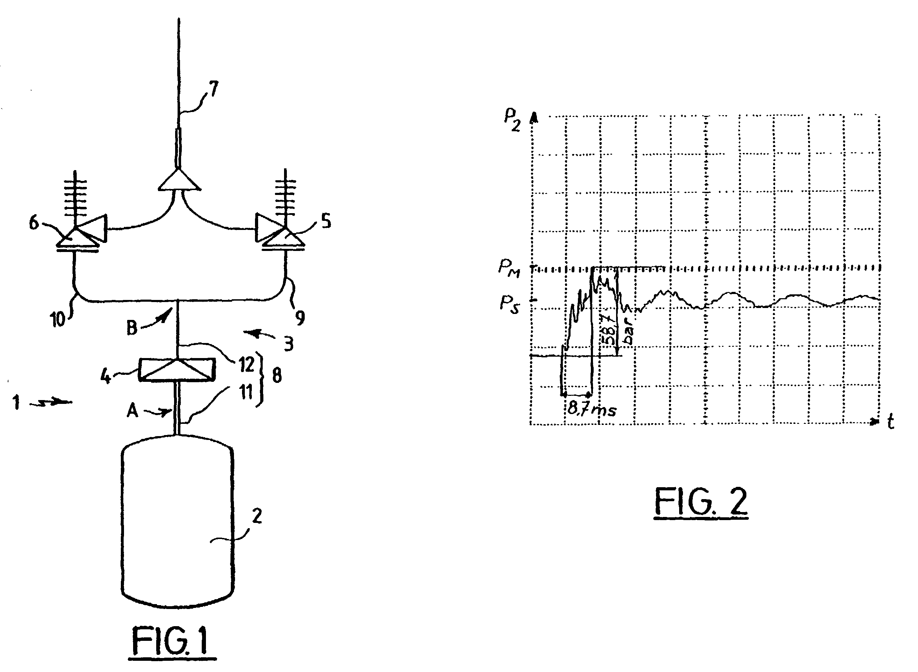

Le dispositif 1 représenté à la figure 1 est connu et comprend un appareil 2 sous pression de gaz ou de vapeur, comme par exemple un réacteur, une tubulure 3, un disque d'éclatement 4, deux soupapes de sécurité 5 et 6 et un tube collecteur d'échappement 7.

La tubulure 3 raccorde l'appareil 2 aux deux soupapes 5 et 6. Elle est constituée d'un tube droit 8 dont une première extrémité est piquée en amont de l'appareil 2 et dont la seconde extrémité se divise en deux branches horizontales 9, 10 possédant chacune une forme en équerre.

Les extrémités libres des branches 9 et 10 portent respectivement les soupapes 5 et 6, situées ainsi en aval de l'appareil 2.

Le disque d'éclatement 4 est interposé entre l'appareil 2 et les soupapes 5 et 6 en étant placé sur la longueur du tube droit 8, qui est ainsi divisé en deux parties 11 et 12. Par conséquent, ce disque 4 sépare la tubulure 3 en deux tronçons : un tronçon A situé en amont du disque 4 et un tronçon B situé en aval de ce disque. Le tronçon A est donc constitué de la partie 11 du tube 8 tandis que le tronçon B comprend la partie 12 de ce tube ainsi que les branches 9 et 10.

Le ciel gazeux de l'appareil 2 est en général constitué d'un premier gaz à vitesse $a_1$ rapide ($a_1$ étant la vitesse du son dans ce milieu), dont la pression est $P_1$, la température est $T_1$ et dont le rapport des capacités calorifiques à pression et volume constants est $\gamma_1$. Le tronçon A relié au réacteur 2 est également rempli de ce même gaz.

Un second gaz, en général de l'air ou de l'azote, occupe le volume du tronçon B. Ce gaz possède une vitesse $a_2$, une pression $P_2$, une température $T_2$ et un rapport $\gamma_2$ des capacités calorifiques à pression et volume constants.

Le disque d'éclatement 4 est prévu pour rompre à une pression donnée $P_r$ et les soupapes 5,6 sont tarées à la pression $P_s$, avec $P_s$ légèrement supérieure à $P_r$.

Lors de la rupture accidentelle du disque 4 dans ce dispositif de l'état de la technique à une pression P nettement inférieure à la pression $P_r$, on constate que les soupapes 5 et 6 s'ouvrent entièrement et ce, malgré que la pression P soit très inférieure à la pression $P_s$ d'ouverture de ces soupapes 5 et 6.

L'ouverture des soupapes 5 et 6 dans ces conditions est très problèmatique puisqu'elle entraine une pollution de l'environnement bien que le fonctionnement de l'appareil 2 soit normal, c'est à dire que la pression $P_1$ ne soit pas anormalement élevée.

Par la mise en place de capteurs de pression au niveau des clapets de chaque soupape 5 et 6 afin d'obtenir les caractéristiques de la pression (figure 2) $P_2$ dans le tronçon aval B, il a été constaté que la rupture du disque d'éclatement 4 conduit à la formation d'une onde de choc ou d'un train d'ondes de choc.

La courbe de la figure 2 caractéristique de la pression générée par l'onde de choc en fonction du temps montre que la pression au niveau des clapets des soupapes passe par un maximum $P_M$. La valeur de ce maximum étant supérieure à la pression de tarage $P_s$ des soupapes, celles-ci s'ouvrent entièrement.

En fait, le maximum de pression $P_M$ de l'onde de choc est le produit du maximum de pression $P_4$ de l'onde de choc incidente ayant une température $T_4$ et du maximum de pression $P_5$ de l'onde de choc réfléchie ou du train d'ondes de choc réfléchies à la température $T_5$. L'onde réfléchie considérée est la résultante des ondes de choc réfléchies sous les sièges des soupapes et qui se combinent pour obtenir une onde de choc réfléchie possédant une forte énergie et une température élevée. En particulier, dans le dispositif de la figure 1, les ondes de choc réfléchies se recombinent au niveau du point de raccordement des branches 9, 10 et de la partie 12 du tube 8.

Ces maximum de pression de l'onde de choc incidente et de l'onde de choc réfléchie sont calculés par les formules approchées suivantes :

$$(1) \quad \frac{P_4}{P_2} = \frac{2\gamma_2 M^2 - (\gamma_2-1)}{\gamma_2 + 1}$$

$$(2) \quad \frac{P_5}{P_4} = \frac{[(\gamma_2+1)/(\gamma_2-1)]+2-[(P_2/P_4)]}{1+[(\gamma_2+1)/(\gamma_2-1)][(P_2/P_4)]}$$

$$(3) \quad \frac{T4}{T2} = \frac{[\gamma_2 M^2 -(\gamma_2-1)/2]\,[(\gamma_2-1)/2)M^2 + 1]}{[(\gamma_2+1)/2)^2 M^2}$$

$$(4) \quad \frac{T5}{T4} = \frac{P5}{P4}\frac{[(\gamma_2+1)/(\gamma_2-1)] + (P5/P4)}{1+[[(\gamma_2+1)/(\gamma_2-1)]\,(P5/P4)]}$$

où un M est la vitesse du front d'onde à la séparation des deux milieux et est obtenu à partir de la formule suivante :

$$(5) \quad \frac{P_1}{P_2} = \frac{2\gamma_2 M^2-(\gamma_2-1)}{\gamma_2+1}\left[1-\frac{\gamma_1-1}{\gamma_2+1}\,\frac{a_2}{a_1}\,\frac{(M-1)}{M}\right]^{\left(-\frac{2\gamma_1}{\gamma_1-1}\right)}$$

$$\text{avec} \quad (6) \quad a_1 = \left( \gamma_1 \, \frac{R}{m_1} \, T_1 \right)^{0.5}$$

$$(7) \quad a_2 = \left( \gamma_2 \, \frac{R}{m_2} \, T_2 \right)^{0.5}$$

dans lesquelles R est la constante des gaz parfaits et $m_1$, $m_2$ les masses molaires respectives des gaz dans les tronçons A et B

Ces relations sont obtenues en considérant qu'il y a conservation de la masse, de la quantité de mouvement, de l'énergie de part et d'autre des discontinuités que représentent les ondes de choc incidentes et réfléchies, et en supposant que les gaz suivent la loi des gaz parfaits. Il a été également considéré que la tubulure 3 est droite.

Ainsi, les lois décrites ci-dessus ne tiennent pas compte de la configuration géométrique des tuyauteries de liaison entre le disque 4 et les soupapes 5 et 6. Dans les configurations industrielles, les montages possèdent des configurations ayant des changements de section qui conduisent à des valeurs d'onde de choc beaucoup plus élevées que celles calculées par les formules précédentes.

Par exemple, il a été mis en évidence sur le dispositif de la figure 1 que la pression maximale de l'onde de choc pouvait atteindre une valeur d'environ supérieure de 58% par rapport à la pression initiale de rupture $P_r$ du disque 4 conduisant à l'ouverture de soupapes tarées à 50 bars effectifs pour des pressions de rupture du disque de 40 bars effectifs.

Les formules précédentes montrent que l'onde de choc est d'autant plus forte que la vitesse du son du gaz situé en amont (tronçon A) du disque d'éclatement 4 est importante tandis que la vitesse du son du gaz situé en aval (tronçon B) du disque d'éclatement 4 est faible.

A cet effet, le dispositif selon l'invention comporte des moyens de protection situés dans le tronçon aval B adaptés pour minimiser la pression maximale d'une onde de choc créée par la rupture du disque d'éclatement et frappant les clapets des soupapes 5 et 6.

Dans un premier mode de réalisation de l'invention, la structure du dispositif représenté à la figure 1 est conservée en disposant dans le tronçon B situé en aval du disque d'éclatement 4, un gaz dont le rapport $\gamma$ est élevé et dont la masse molaire m est faible, ce qui a pour effet d'augmenter sensiblement la vitesse du son $a_2$ de ce gaz.

De tels gaz répondant aux deux critères précédemment cités sont l'hélium et l'hydrogène.

Dans un deuxième mode de réalisation de l'invention, les moyens de protection sont formés par une enceinte placée sur le tronçon B et destinée à minimiser le maximum de pression $P_m$ en évitant l'existence d'ondes de choc incidentes et d'ondes de choc réfléchies frappant les clapets des soupapes 5 et 6.

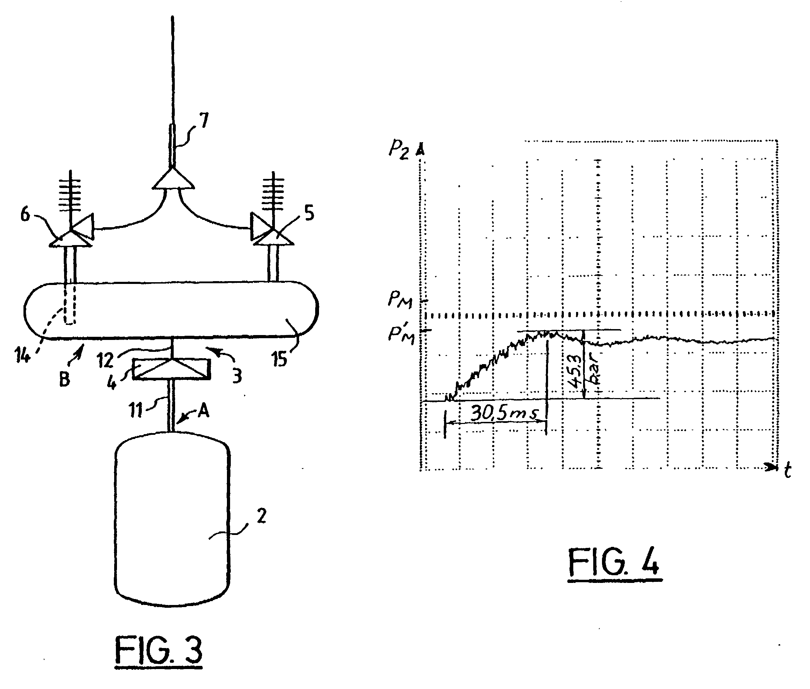

Un dispositif possédant de tels moyens est décrit en regard de la figure 3. Dans ce dispositif, les parties identiques à celui de la figure 1 portent les mêmes références numériques.

Dans ce deuxième mode de réalisation de l'invention, le dispositif de sécurité représenté à la figure 3 comprend l'appareil 2 à protéger, relié à la partie 11 du tube 8 au disque d'éclatement 4. Une enceinte 15 est reliée en aval du disque 4 par la partie 12 du tube 8.

Cette enceinte 15 est un cylindre fermé à ses deux extrémités par des parois hémisphériques ou elliptiques. Elle est placée perpendiculairement au tube droit 12. Les deux soupapes de sécurité 5 et 6 sont maintenant directement piquées sur la longueur de l'enceinte 15, en aval de celle-ci.

Le clapet de la soupape de sécurité 6 est relié à une crépine droite 14 faisant saillie à l'intérieur de l'enceinte 15. La forme cylindrique de l'enceinte 15 permet d'atténuer les ondes incidentes et les ondes réfléchies apparaissant lors de la rupture du disque d'éclatement 4, ce qui permet de réduire le maximum de pression $P'_M$ (figure 4). En effet, les ondes réfléchies sur les parois de l'enceinte reviennent au centre de l'enceinte 15 en s'y atténuant et les clapets des soupapes 5 et 6 ne subissent pas la pression liée à ces ondes. On observe que, à la figure 4, le maximum de pression $P'_M$ est bien inférieure au maximum de pression $P_M$ résultant du dispositif de l'état de la technique. De plus, ce maximum $P'_M$ est atteint en un temps plus long que précédemment.

La crépine 14 permet encore d'améliorer l'atténuation de la surpression au niveau de la soupape 6 en éliminant de manière plus performante encore les ondes incidentes et les ondes réfléchies.

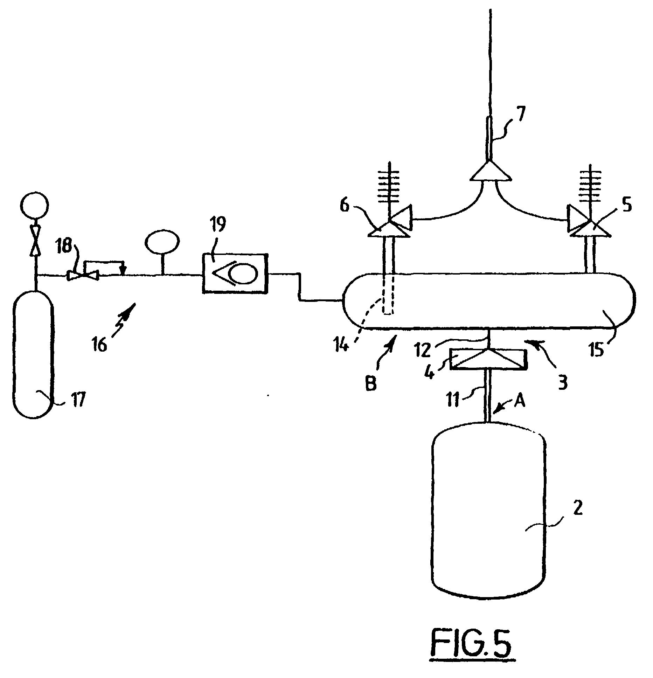

Dans un troisième mode de réalisation de l'invention, ces moyens de protection constitués par l'enceinte 15 peuvent être combinés aux moyens gazeux tels que l'hélium et l'hydrogène. Ainsi, un gaz tel que l'hélium ou l'hydrogène peut être maintenu en surpression à l'intérieur de l'enceinte 15 par des moyens 16 représentés à la figure 5.

Les moyens 16 de maintien de l'enceinte 15 en légère surpression comprennent une bouteille sous pression 17, un détendeur 18 et un clapet anti-retour 19. Ces moyens sont reliés à l'enceinte 15 au niveau de l'une de ses parois hémisphériques.

Le gaz comprimé dans la bouteille 17 est détendu par la soupape 18 et le clapet anti-retour 19.

Dans ce troisième mode de réalisation de l'invention, la surpression au niveau du clapet de la soupape 5 à tubulure non crépinée n'est plus alors que de 16% au-delà de la pression d'éclatement et seulement de 7% au niveau du clapet de la soupape 6 à tubulure crépinée.

Par ailleurs, l'utilisation de soupapes non pilotées capables d'absorber une surpression permet également d'éviter l'ouverture intempestive de ces soupapes lors de la rupture du disque d'éclatement 4.


**Revendications**

1.   Dispositif de sécurité d'un appareil (2) sous pression de gaz ou de vapeur comprenant au moins une soupape aval (6) reliée à l'appareil (2) sous pression par une tubulure (3) portant un disque d'éclatement (4) qui sépare cette tubulure (3) en un tronçon amont A et en un tronçon aval B, caractérisé en ce que le tronçon aval B comporte des moyens de protection adaptés pour minimiser la pression maximale d'une onde de choc créée par la rupture du disque d'éclatement (4) et frappant le clapet de ladite au moins une soupape (6).

2.   Dispositif selon la revendication 1, caractérisé en ce que les moyens de protection sont formés par un gaz de faible masse molaire et possédant des rapports γ des capacités calorifiques à pression et volume constants élevés contenu dans le tronçon aval B.

3.   Dispositif selon la revendication 1, caractérisé en ce que les moyens de protection sont formés par une enceinte (15) contenant un gaz et placée sur le tronçon B, et de forme adaptée pour réduire l'onde de choc formée d'une onde de choc incidente et d'une onde de choc réfléchie, et agissant sur le clapet de ladite au moins une soupape (6).

4.   Dispositif selon la revendication 1, caractérisé en ce que les moyens de protection sont formés par un gaz de faible masse molaire et possédant des rapports γ des capacités calorifiques à pression et à volume constants élevés contenu dans une enceinte disposée sur le tronçon aval B.

5.   Dispositif selon l'une quelconque des revendications 1 à 4, caractérisé en ce le gaz est formé par l'un des deux gaz parmi l'hydrogène et l'hélium.

6.   Dispositif selon la revendication 3 ou 4, caractérisé en ce que, pour un dispositif à plusieurs soupapes (5,6), chaque soupape est indépendamment reliée à l'enceinte (15).

7.   Dispositif selon la revendication 6, caractérisé en ce que le clapet d'au moins une soupape (6) est relié à au moins une crépine (14) faisant saillie à l'intérieur de l'enceinte (15).

8.   Dispositif selon l'une quelconque des revendications 3 à 7, caractérisé en ce que l'enceinte (15) est reliée à des moyens de maintien de ladite enceinte en légère surpression de gaz.


**Claims**

1.   A safety device for a gas or steam pressure vessel (2) including at least one downstream valve (6) connected to the pressure vessel (2) by tubing (3) which has a burst disc (4) which separates this tubing (3) into an upstream section A and a downstream section B, characterised by the fact that the downstream section B has suitable protective means for minimising the maximum pressure of a shock wave created by the burst disc (4) breaking and striking the flap of at least one said valve (6).

2.   A device according to Claim 1, characterised by the fact that the protective means are formed by a low molar weight gas and having ratios γ of the calorific capacities at high constant pressure and volume contained in the upstream section B.

3.   A device according to Claim 1, characterised by the fact that the protective means are formed by an enclosure (15) containing a gas and placed on section B, and of a suitable form to reduce the shock wave formed by an incident shock wave and a reflected shock wave, and acting on the flap of at least one said valve (6).

4.  A device according to Claim 1, characterised by the fact that the protective means are formed by a gas of low molar weight and having ratios γ for the calorific capacities at high constant pressure and volume contained in an enclosure arranged on the downstream section B.

5.  A device according to any one of the Claims 1 to 4, characterised by the fact that the gas is formed by one of the two gases among hydrogen and helium.

6.  A device according to Claim 3 or 4, characterised by the fact that, for a device with several valves (5,6), each valve is independently connected to the enclosure (15).

7.  A device according to Claim 6, characterised by the fact that the flap of at least one valve (6) is connected to at least one strainer projecting inside the enclosure (15).

8.  A device according to any one of the Claims 3 to 7, characterised by the fact that the enclosure (15) is connected to means of keeping the said enclosure at a slight gas overpressure.

**Patentansprüche**

1.  Sicherheitseinrichtung für eine Vorrichtung (2) unter Gas- oder Dampfdruck, umfassend mindestens ein unteres Ventil (6), das mit der Vorrichtung (2) unter Druck über einen Rohrstutzen (3) verbunden ist, der eine Berstscheibe (4) trägt, welche den Rohransatz (3) in einen oberen Abschnitt A und einen unteren Abschnitt B teilt, dadurch gekennzeichnet, dass der untere Abschnitt B Schutzvorrichtungen aufweist, die so angepasst sind, dass sie den Maximaldruck einer Schockwelle minimieren, die durch Zerbrechen der Berstscheibe (4) erzeugt wird und die Rückschlagklappe des mindestens einen Ventils (6) durchschlägt.

2.  Vorrichtung nach Anspruch 1, dadurch gekennzeichnet, dass die Schutzvorrichtungen von einem Gas mit niedriger Molekülmasse gebildet werden, das erhöhte Verhältnisse γ der Wärmekapazitäten zum konstanten Druck und Volumen besitzt und im unteren Abschnitt B enthalten ist.

3.  Vorrichtung nach Anspruch 1, dadurch gekennzeichnet, dass die Schutzvorrichtungen von einem Behälter (15) gebildet werden, der ein Gas enthält und auf dem unteren Abschnitt B angebracht ist, und so angepasst sind, dass sie die Schockwelle verringern, die von einer eintreffenden Schockwelle und einer reflektierten Schockwelle gebildet wird und auf die Rückschlagklappe des mindestens einen Ventils (6) einwirkt.

4.  Vorrichtung nach Anspruch 1, dadurch gekennzeichnet, dass die Schutzvorrichtungen von einem Gas mit niedriger Molekülmasse gebildet werden, das erhöhte Verhältnisse γ der Wärmekapazitäten zum konstanten Druck und Volumen besitzt und in einem Behälter enthalten ist, der auf dem unteren Abschnitt B befestigt ist.

5.  Vorrichtung nach einem der Ansprüche 1 bis 4, dadurch gekennzeichnet, dass das Gas von einem der zwei Gase Wasserstoff und Helium gebildet wird.

6.  Vorrichtung nach Anspruch 3 oder 4, dadurch gekennzeichnet, dass bei einer Vorrichtung mit mehreren Ventilen (5, 6) jedes Ventil unabhängig mit dem Behälter (15) verbunden ist.

7.  Vorrichtung nach Anspruch 6, dadurch gekennzeichnet, dass die Rückschlagklappe des mindestens einen Ventils (6) mit mindestens einem Schutzfilter (14) verbunden ist, der im Inneren des Behälters (15) einen vorsprung bildet.

8.  Vorrichtung nach einem der Ansprüche 3 bis 7, dadurch gekennzeichnet, dass der Behälter (15) mit Haltevorrichtungen für den Behälter unter leichtem Gasüberdruck verbunden ist.

EP 0 756 517 B1

FIG.2

FIG.1

7

FIG. 3

FIG. 4

EP 0 756 517 B1

EP 0 756 517 B1

FIG.5